# EUROPÄISCHE PATENTANMELDUNG

(11) **EP 0 679 926 A2**
(43) Veröffentlichungstag der Anmeldung: **02.11.1995**
(21) Anmeldenummer: 95890073.0
(22) Anmeldetag: 06.04.1995
(51) Int. Cl.: G03B 1/00, B65G 59/06, B23Q 7/06

(54) **Ausgabeeinheit**

(30) Priorität: 27.04.1994 AT 878/94
(71) Anmelder: P.E.E.M. Förderanlagen Ges.m.b.H., 8051 Graz (AT)
(72) Erfinder: Neukam, Helmut, A-8071 Hausmannstätten (AT)
(74) Vertreter: Kliment, Peter

(57) **Zusammenfassung**

Ausgabeeinheit mit einem zur Aufnahme des einzelweise auszugebenden Warenstapels vorgesehenen vertikalen oder schräg nach unten verlaufenden Schacht, dessen lichter Querschnitt den entsprechenden Abmessungen der auszugebenden Stücke entspricht, und mindestens zwei am unteren Ende des Schachtes angeordnete und um mindestens eine in einer Querschnittsebene desselben verlaufenden Achse schwenkbar gehaltene Hebel, insbesondere Winkelhebel, von denen einer mit einem Schenkel in einer Sperrstellung in den lichten Raum des Schachtes eingreift und in einer Freigabestellung aus diesem zurückgezogen ist und der zweite in Abhängigkeit und im wesentlichen in Gegenphase zum ersten gesteuerte Hebel in einer Stellung an dem Stapel klemmend zur Anlage bringbar ist. Um einen kompakten Aufbau zu ermöglichen, ist vorgesehen, daß zur Steuerung der beiden Hebel (7. 9) mindestens ein Schieber (5, 6), mindestens eine Steuerkurve (15, 20) und mindestens ein im Abstand von der bzw. den Schwenkachsen (12, 13) angeordneter Stift (14, 16) vorgesehen sind, wobei die Steuerkurve(n) (15, 20) und der, bzw. die Stift(e) (14, 16) an verschiedenen der zusammenwirkenden Teile, u.zw. Hebeln (7, 9) und Schieber (5, 6), angeordnet sind.

## Beschreibung

Die Erfindung bezieht sich auf eine Ausgabeeinheit gemäß dem Oberbegriff des Anspruches 1.

Eine solche Ausgabeeinheit wurde z.B. durch die CH-PS 654 274 bekannt. Bei dieser bekannten Lösung sind zwei Paare von Winkelhebel vorgesehen, die beide mit einem Ansatz versehen sind, der mit den Nocken einer Nockenwelle zusammen wirkt, wobei beide Winkelhebel gegen deren Sperr- bzw. Klemmstellung vorgespannt sind. Durch entsprechende Ansteuerung der Nockenwellen, die sich bei jeder Ansteuerung um eine Umdrehung weiterdrehen, wird erreicht, daß zuerst die in den lichten Querschnitt des Schachtes eingreifenden Winkelhebel nach außen gedrückt werden und nach deren Rückkehr in die Sperrstellung die klemmend an den Stapel der auszugebenden Waren anliegenden Winkelhebel kurz nach außen gedrückt werden, sodaß der Stapel nachrutschen kann.

Bei dieser bekannten Lösung liegen die Nockenwellen seitlich des Schachtes und sind von den Winkelhebeln übergriffen. Dabei ergibt sich jedoch der Nachteil eines sehr erheblichen Platzbedarfes. Außerdem ist bei einer rascheren Betätigung der Ausgabeeinheit eine erhebliche Lärmbelastung nicht zu vermeiden.

Ziel der Erfindung ist es, diese Nachteile zu vermeiden und eine Ausgabeeinheit der eingangs erwähnten Art vorzuschlagen, die sich durch einen einfachen Aufbau und einen geringen Platzbedarf auszeichnet. Insbesondere soll es möglich sein, mehrere Ausgabeeinheiten relativ eng nebeneinander anzuordnen.

Erfindungsgemäß wird dies bei einer Ausgabeeinheit der eingangs erwähnten Art durch die kennzeichnenden Merkmale des Anspruches 1 erreicht.

Durch die vorgesehene Steuerung mittels des mit den Hebeln zusammenwirkenden Schiebers ist eine sehr kompakte Bauweise möglich, da der Schieber relativ schmal ausgebildet werden kann. Letztlich braucht der Schieber oder Hebel nur eine dem Eingriffsweg des in den lichten Querschnitt des Schachtes eingreifenden Hebels entsprechende Breite aufzuweisen. Auch der klemmend an dem Stapel zur Anlage bringbare Hebel braucht nur einen sehr kleinen Bewegungsweg aufzuweisen, wodurch es eben möglich ist, den Schieber oder Hebel sehr schmal auszubilden. Außerdem läßt sich eine Steuerkurve, z.B. eine Steuernut wesentlich einfacher als eine Nockenwelle herstellen, sodaß sich auch im Hinblick auf den Herstellungsaufwand entsprechende Vorteile ergeben.

Es kann dabei die Steuerkurve an einem Schieber angeordnet sein, wobei dann an den Hebeln Stifte angeordnet sind, die mit der Steuerkurve in Eingriff stehen. Es ist aber auch die kinematische Umkehr einer solchen Lösung denkbar. In diesem Fall kann der Schieber mit einem seitlich abstehenen Stift versehen sein, der mit an den Hebeln angeordneten Steuerkurven, z.B. Steuernuten in Eingriff steht.

Durch die Merkmale des Anspruches 2 ergibt sich der Vorteil, daß die Steuerung der Ausgabe eines Stückes eines Warenstapels genau auf die Form des auszugebenden Stückes abgestimmt werden kann.

In diesem Zusammenhang ergeben sich durch die Merkmale des Anspruches 4 besondere Vorteile. So ist es auf diese Weise möglich durch entsprechendes Verstellen der den in den lichten Querschnitt des Schachtes eingreifenden Hebel zugeordneten Schiebern und den an dem Warenstapel klemmend zur Anlage bringbaren Hebeln zugeordneten Schiebern unterschiedlich gegenüber einem die Verbindung der Schieber herstellenden Bauteil einzustellen. Dadurch kann der Zeitablauf eines Bewegungsspieles der beiden Hebel beeinflußt werden, ohne, daß dazu ein Schieber verändert werden muß.

Damit ist es auf einfache Weise möglich sicherzustellen, daß der Warenstapel bereits klemmend gehalten wird, bevor der bzw. die in den lichten Querschnitt des Schachtes eingreifenden Auflagerhebel aus dem Schacht zurückgezogen wird bzw. werden und die Klemmung erst aufgehoben wird, sobald der, bzw. die Auflagerhebel wieder in den lichten Querschnitt eingeschwenkt sind.

Durch die Merkmale des Anspruches 3 ergibt sich der Vorteil einer sehr sicheren Klemmung bei relativ geringen Anpreßdrücken, sodaß auch relativ empfindliche Warenstücke ausgegeben werden können.

Die Erfindung wird nun anhand der Zeichnung näher erläutert. Dabei zeigen:
Fig. 1 schematisch einen Schnitt durch eine erfindungsgemäße Ausgabeeinheit,
Fig. 2 schematisch einen Schnitt entlang der Linie II-II in der Fig. 1,
Fig. 3 einen Schnitt entlang der Linie III-III in der Fig. 1,
Fig. 4 einen Schieber zur Steuerung eines in den lichten Querschnitt des Schachtes eingreifenden Hebels,
Fig. 5 eine Draufsicht auf den Schieber nach der Fig. 4,
Fig. 6 einen Schieber zur Steuerung eines klemmend an einem Warenstapel zur Anlage bringbaren Hebels und
Fig. 7 eine Draufsicht auf den Schieber nach der Fig. 6.

Die erfindungsgemäße Ausgabeeinheit ist am unteren Ende eines Schachtes 10 angeordnet und weist zu beiden Seiten des Schachtes 10 zwei Paare von Hebeln 7 und 9 auf. Dabei sind die jeweils zu einem Paar gehörenden Hebel 7, 9 im Bereich ihrer einen Schenkel über Stege 71 bzw. 91 miteinander verbunden.

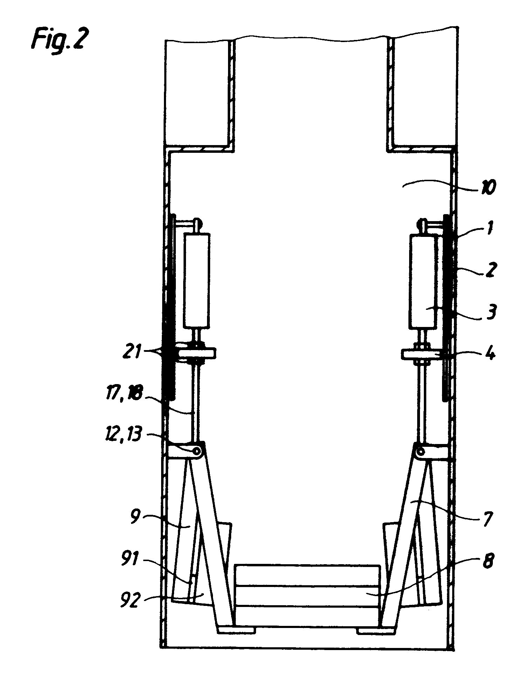

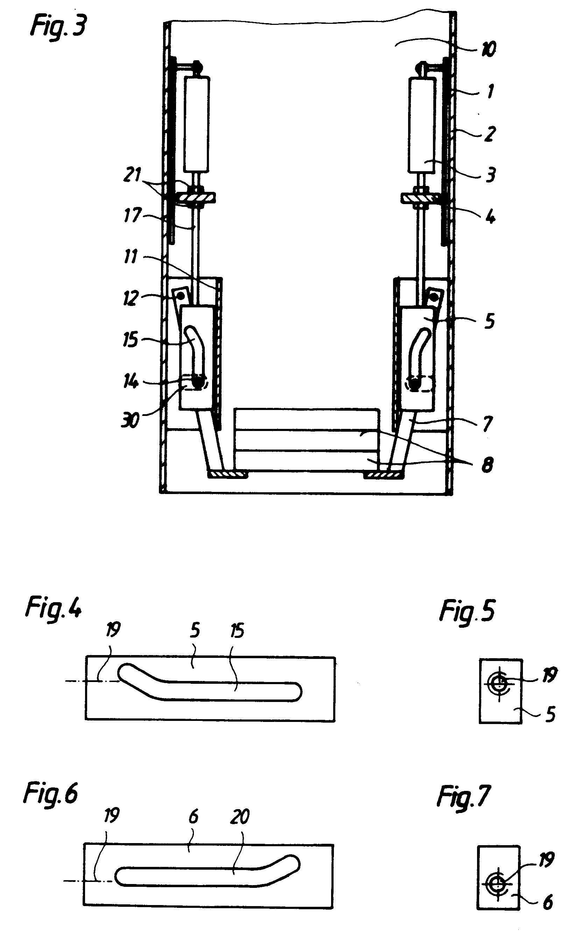

Wie aus der Fig. 2 und 3 zu ersehen ist, sind die Hebel 7 und 9 um in einer Führung 11 gehaltenen Achsen 12, bzw. 13 schwenkbar gehalten. Die Führungen 11 weisen dabei einen U-förmigen Querschnitt auf und sind an einer Grundplatte 2 gehalten, wobei die Führungen 11 mit der Grundplatte 2 im Querschnitt rechteckige Räume umschließen.

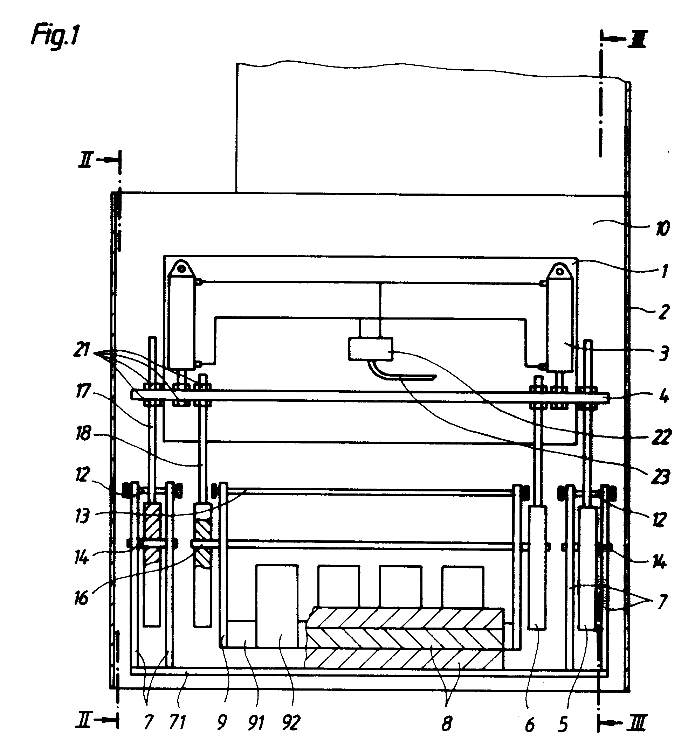

In diesen Führungen 11, die in der Fig. 1 und 2 nicht dargestellt sind, sind Schieber 5 in vertikaler Richtung verschiebbar gehalten, wobei die Steuerkurven 15 dieser Schieber 5, wie aus der Fig. 3 zu ersehen ist, spiegelbildlich ausgebildet und zur Steuerung der Hebel 7 vorgesehen sind, die in den lichten Querschitt des Schachtes 10 in einer Stellung eingreifen und durch entsprechendes Verschieben der Schieber 5 aus diesem zurückgezogen werden können.

Wie aus der Fig. 1 zu ersehen ist, sind die Hebel 9 durch Schieber 6 gesteuert, die in der Fig. 6 und 7 dargestellt sind. Dabei sind diese Schieber 6 ebenfalls in Führungen, ähnlich den Führungen 11 geführt, welche ersteren jedoch in der Fig. 1 nicht dargestellt sind.

Wie aus der Fig. 1 zu ersehen ist, sind die Hebel 7 als Doppelhebel ausgebildet, die miteinander durch Stifte 14 verbunden sind, die einen als Steuerkurve 15 ausgebildeten Schlitz des Schiebers 5 durchsetzen, wodurch eine sichere Steuerung der Hebel 7 gewährleistet ist. Dabei durchsetzen die Stifte 14 auch in den Seitenwänden einer Führung 11, in der der Schieber 5 axial verschiebbar gehalten ist und durch die eine seitliche Auslenkung des Schiebers 5 verhindert wird, angeordnete Langlöcher 30.

In gleicher Weise sind die Hebel 9 auf in den nicht dargestellten Führungen der Schieber 6 gehaltenen Achsen 13 schwenkbar gehalten, wobei diese Hebel 9 weiters über einen Stift 16 miteinander verbunden sind, der auch in die beiden Schieber 6 eingreift, von denen einer in den Fig. 6 und 7 dargestellt ist. Die Führungen der Schieber 6 sind ähnlich den Führungen 11 der Schieber 5 ausgebildet.

Außerdem durchsetzt dieser Stift 16 die Seitenwände der nicht dargestellten Führungen der Schieber 6 in Länglöchern ähnlich den in Fig. 3 strichliert dargestellten Langlöchen 30. Die als Schlitze ausgebildeten Steuerkurven 20 der zweiten Schieber 6 sind spiegelbildlich ausgebildet, wobei dies durch einfaches Drehen um eine Längs- und eine Querachse eines von zwei gleich ausgebildeten Schiebern erfolgen kann.

Die Stege 91, die je zwei Hebel 9 miteinander verbinden, weisen aus einem Elastomer hergestellte Auflagen 92 auf, die an einem im Schacht 10 befindlichen Stapel von auszugebenden Stücken 8 klemmend zur Anlage bringbar sind, um den Stapel zu halten.

Die Schieber 5, 6 sind über in diese eingeschraubte Stangen 17, 18 mit einem Träger 4 verbunden, an dem zwei doppelseitig beaufschlagbare Zylinder-Kolbenanordnungen 3 angreifen. Dazu sind die Stangen 17, 18 in Gewindebohrungen 19 der Schieber 5, 6 eingeschraubt und durchsetzen den Träger 4. Die Fixierung der Stangen 17, 18, die auch an ihren zweiten Enden mit Gewinden versehen sind, erfolgt jeweils mittels zweier Muttern 21, die an dem Träger 4 anliegen. Dadurch ist es möglich, den Abstand der Schieber 5, 6 vom Träger entsprechend einzustellen.

Letzteres ermöglicht es die Schieber so einzustellen, daß ausgehend von einer Ruhelage, in der die Hebel 7 in den lichten Querschnitt des Schachtes 10 eingreifen und den Stapel von Stücken 8 untergreifen und halten, zuerst die Hebel 9, bzw. deren Elastomerauflagen 92 an den Seitenwänden des über dem untersten Stück 8, das direkt von den Hebeln 7 gehalten wird, lieg4nden Stück 8 klemmend zur Anlage gebracht wird. Danach werden die Hebel 7 aus dem lichten Querschnitt des Schachtes 10 zurückgezogen, sodaß das unterste Stück 8 nach unten fallen kann. Anschließend werden die Hebel 7 wieder in den Schacht eingeschwenkt und danach die Hebel 9 wieder in ihre Ruhelage zurückgezogen, sodaß der Stapel von Stücken 8 nach unten rutschen kann.

Die Zylinder-Kolbenanordnungen 3, die an einer Verschiebeplatte 1 gehalten sind, die zu Einstellzwecken auf einer Grundplatte 2 verstellbar gehalten ist, sind mit dem Träger 4 ebenfalls mittels auf den freien Enden der Kolbenstangen angeordneten Gewinden und Muttern 21 befestigt, wobei die Kolbenstangen den Träger 4 durchsetzen.

Die Ansteuerung der Zylinder-Kolbenanordnungen 3, die als doppelseitig beaufschlagbare Zylinder ausgebildet sind, erfolgt über ein Ventil 22, das an eine Druckluftleitung 23 angeschlossen ist, und die beiden Paare von Zylinder-Kolbenanordnungen 3 ansteuert.

## Patentansprüche

1. Ausgabeeinheit mit einem zur Aufnahme des einzelweise auszugebenden Warenstapels vorgesehenen vertikalen oder schräg nach unten verlaufenden Schacht (10), dessen lichter Querschnitt den entsprechenden Abmessungen der auszugebenden Stücke (8) entspricht, und mindestens zwei am unteren Ende des Schachtes (10) angeordnete und um mindestens eine in einer Querschnittsebene desselben verlaufenden Achse (12, 13) schwenkbar gehaltene Hebel, insbesondere Winkelhebel (7, 9), von denen einer mit einem Schenkel in einer Sperrstellung in den lichten Raum des Schachtes (10) eingreift und in einer Freigabestellung aus diesem zurückgezogen ist und der zweite in Abhängigkeit und im wesentlichen in Gegenphase zum ersten gesteuerte Hebel in einer Stellung an dem Stapel klemmend zur Anlage bringbar ist, **dadurch gekennzeichnet**, daß zur Steuerung der beiden Hebel (7. 9) mindestens ein Schieber (5, 6), mindestens eine Steuerkurve (15, 20) und mindestens ein im Abstand von der bzw. den Schwenkachsen (12, 13) angeordneter Stift (14, 16) vorgesehen sind, wobei die Steuerkurve(n) (15, 20) und der, bzw. die Stift(e) (14, 16) an verschiedenen der zusammenwirkenden Teile, u.zw. Hebeln (7, 9) und Schieber (5, 6), angeordnet sind.

2. Ausgabeeinheit nach Anspruch 1, bei der zwei Paare von Winkelhebeln vorgesehen sind, **dadurch gekennzeichnet**, daß jedem Hebel (7, 9) ein Schieber (5, 6) zugeordnet ist, die miteinander verbunden sind und von mindestens einer Antriebseinheit, z.B. einer Zylinder-Kolbeneinheit (3) beaufschlagbar sind.

3. Ausgabgeeinheit nach Anspruch 1 oder 2, **dadurch gekennzeichnet**, daß der bzw. die klemmend am Stapel der auszugebenden Stücke (8) zur Anlage bringbare Hebel (9) teilweise mit einem elastisch verformbaren Material, vorzugsweise einem Elastomer mit hohem Reibungskoeffizienten, an der den auszugebenden Waren zugekehrten Seite belegt ist bzw. sind.

4. Ausgabeeinheit nach einem der Ansprüche 1 bis 3, **dadurch gekennzeichnet**, daß die Schieber (5, 6) einstellbar mit einem mit der bzw. den Antriebseinheit(en) (3) verbunden Träger (4) verbunden sind.
